# FASCICULE DE BREVET EUROPEEN

(11) **EP 1 122 440 B1**
(45) Date de publication et mention de la délivrance du brevet: **23.07.2008**
(21) Numéro de dépôt: 01400124.2
(22) Date de dépôt: 17.01.2001
(51) Int. Cl.: F04C 29/00, F04C 18/12, B01D 53/06

(54) **Procédé de régulation d'une installation de traitement de fluide**
Verfahren zur Regulierung der Behandlung von Fluiden
Method of controlling a process for treating fluids

(30) Priorité: 07.02.2000 FR 0001479
(43) Date de publication de la demande: 08.08.2001
(73) Titulaire: L'AIR LIQUIDE, Société Anonyme pour l'Etude et l'Exploitation des Procédés Georges Claude, 75007 Paris (FR)
(72) Inventeur: Despreaux, Frédéric, 13140 Miramas (FR); Derive-Teuscher, Nathalie, 94220 Charenton (FR); Monereau, Christian, 75011 Paris (FR)
(74) Mandataire: Le Moenner, Gabriel

(56) Documents cités:
- EP-A- 0 743 087
- WO-A-98/35134
- GB-A- 1 195 368

## Description

La présente invention concerne le domaine des installations de traitement de fluide, plus particulièrement de type à adsorption par variation de pression, comportant au moins une machine de compression pour faire circuler des fluides dans l'installation.

Les machines de compression, créant un différentiel de pression entre une admission et un refoulement, et utilisables donc comme compresseur pour porter le fluide à une pression supérieure ou comme pompe pour aspirer le fluide et dépressuriser une circuiterie amont, sont généralement conçues en fonction du rapport de pression ou de la différence de pression entrée/sortie recherchés en régime nominal d'utilisation, ce dernier se traduisant par un certain nombre de paramètres opérationnels pour la machine de compression, en particulier la température des pièces mobiles. Les jeux de ces dernières par rapport au stator et aux paliers tiennent compte de la dilatation de ces différents composants résultant de l'élévation de la température entre la machine au repos et la machine en fonctionnement nominal.

A titre d'exemple, le document WO 98/35134 enseigne un procédé de régulation d'une installation de traitement de fluide, comprenant une machine de compression de fluide, caractérisé en ce qu'on mesure le jeu entre deux rotors de la machine, on génère un signal de la mesure de jeu, on compare ce signal avec au moins un seuil déterminé, et lorsque le signal dépasse temporairement ledit seuil déterminé soit on arrête la pompe, soit on agit sur la dilatation ou la rétractation d'au moins une partie du mur de séparation des rotors, à l'aide de moyens de chauffage et de refroidissement.

De même, le document GB-A-1195368 enseigne un procédé similaire caractérisé en ce que lorsque le signal dépasse le seuil déterminé on arrête la pompe.

Pour des faibles surpressions, typiquement de l'ordre de 100 kPa (1 bar) pour un fonctionnement en compresseur et de 50 kPa (0,5 bar) pour un fonctionnement en pompe à vide, la plupart des machines de compression, et notamment les machines rotatives à rotors profilés peuvent fonctionner sans refroidissement, la dilatation demeurant modérée.

Pour des surpressions plus importantes, et des durées de fonctionnement prolongées, les machines de compression doivent être refroidies, par injection d'eau ou de gaz dans le circuit de fluide.

Quoique offrant des performances et une sûreté accrues, les machines de compression refroidies se révèlent particulièrement onéreuses, en particulier compte tenu des équipements annexes nécessaires.

De fait, le refroidissement ne s'avère nécessaire que pour des utilisations prolongées avec des rapports de compression importants et on peut s'en affranchir en contrôlant et limitant selon des barèmes pré-établis la durée de fonctionnement de la machine à plein régime, comme décrit par exemple dans la notice d'utilisation des surpresseurs ROOTS-HIBON - Série SC, de mars 1993, commercialisés par la société HIBON International.

Toutefois, un contrôle et une mise en oeuvre d'une telle machine de compression uniquement en fonction des durées de phases de fonctionnement à plein régime est délicate à mettre en oeuvre dans des installations à régime variable en fonction de la demande, à cycles de traitements courts, où les phases de compression et/ou de pompage sont extrêmement courtes, ou encore dans des installations à machine de compression réversible telles que décrites dans le document EP-A-0 743 087, au nom de la demanderesse.

La présente invention a pour objet un procédé de mise en oeuvre intermittente et de contrôle d'une machine de compression de fluide couplée à une installation de traitement de fluide, typiquement du type par adsorption et variation de pression, de conception simple et efficace, offrant pour des machines non refroidies, une grande souplesse d'utilisation et de sécurité accrue.

Pour ce faire, un procédé selon la revendication 1 de l'invention est proposé.

Selon des caractéristiques plus particulières : on génère un signal de la mesure de jeu, on compare ce signal avec un seuil déterminé, et on agit sur le fonctionnement de l'installation lorsque le signal dépasse temporairement le seuil, en particulier, pour les installations du type à adsorption à variation de pression, on agit sur tout ou partie du cycle d'adsorption/désorption.

Les mesures de jeu dans les machines de compression, notamment les machines tournantes, sont bien connues dans la technique, comme décrit par exemple dans les documents US-A-5 198 763 et US-A-5 696 444.

Les mesures de jeu connues ont toutefois essentiellement pour objectif de suivre l'évolution de jeux à évolution lente et permanente, en particulier en fonction de l'usure de pièces en mouvement relatif, pour émettre in fine une alarme et/ou arrêter la machine et non pour opérer un processus permanent de régulation de fonctionnement de l'installation de traitement de gaz selon la présente invention.

L'invention a également pour objet une installation de traitement comme définit dans la revendication 6.

La présente invention a enfin pour objet l'application d'une telle installation à la production d'un constituant de l'air comme définit dans la revendication 12.

D'autres caractéristiques et avantages de l'invention ressortiront de la description suivante de modes de réalisation, donnés à titre illustratif mais nullement limitatif, faite en relation avec des dessins annexés sur lesquels :
- la figure 1 représente schématiquement un exemple d'une installation de traitement de fluide par adsorption et variation de pression selon l'invention ; et
- la figure 2 est une vue partielle, en coupe, d'un mode de réalisation d'une machine tournante de compression selon l'invention.

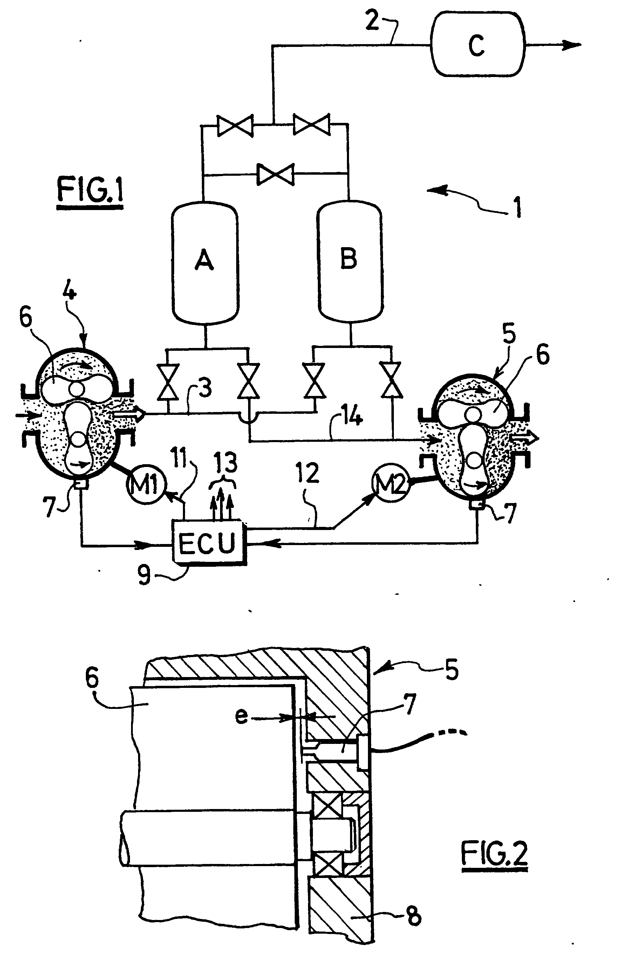

Sur la figure 1, on reconnaît l'agencement général d'une installation 1 de traitement de fluide par adsorption à variation de pression de part et d'autre de la pression atmosphérique, dite PVSA (PressureNacuum Swing Adsorption).

Dans l'exemple représenté, l'installation comprend deux adsorbeurs A, B remplis chacun d'au moins un lit d'adsorbant, dont les sorties sont reliées à une ligne de production 2 comportant une capacité tampon C et dont les entrées sont sélectivement connectables, via un second jeu de vannes, à une ligne d'admission 3 recevant un mélange gazeux à séparer comprimé par un compresseur 4, et à une ligne d'évacuation 14 incorporant une pompe d'évacuation 5.

Avantageusement, le compresseur 4 comme la pompe 5 est une machine tournante à rotors multilobés 6 du type dit Roots, sans fluide de refroidissement externe, telle que décrite dans la documentation Roots-HIBON susmentionnée, qui convient tout particulièrement à ce type d'installation VPSA pour la production d'oxygène à partir de l'air atmosphérique où la surpression demandée au compresseur 4 n'excède pas 130 kPa (1,3 bar) et la dépression demandée à la pompe 5 demeure inférieure à 60 kPa (0,6 bar). Le compresseur 4 et la pompe 5 sont respectivement entraînés par des moteurs électrique M1 et M2.

Selon l'invention, comme représenté plus en détail sur la figure 2, au moins un détecteur de proximité 7 est monté dans le carter 8 de la pompe 5 ou du compresseur 4 à proximité d'une extrémité, par exemple axiale dans l'exemple de la figure 2, d'un des rotors 6 pour fournir à une unité centrale de commande 9 un signal représentatif du jeu e entre le plan de référence du détecteur 7 et la face d'extrémité du rotor et évaluer ainsi les effets de la dilatation dans la machine tournante selon son régime et la durée de fonctionnement aux différents régimes.

Dans l'unité centrale 9 le signal émis par un capteur 7 est comparé, dans un étage comparateur, à au moins une valeur de référence pré-établie, déterminée expérimentalement selon le cycle nominal de l'installation 1 et les variations de régime imposées in situ par l'utilisateur. En fonction d'un franchissement du seuil représenté par cette valeur de référence, l'unité 9 fournit des signaux 11,12 au compresseur 4 et/ou à la pompe 5 pour abaisser temporairement leur régime de rotation et/ou anticiper le passage à une étape moins contraignante pour la machine, jusqu'à ce que le signal repasse en dessous de la valeur de seuil, en « forçant» temporairement les réglages nominaux de cycle de l'installation enregistrés dans l'unité 9.

Avantageusement et concomitamment, pour tenir compte des temps morts supplémentaires imposés aux machines tournantes 4 et 5, l'unité 9 fournira également des signaux 13 aux différentes vannes d'entrée et de sortie pour anticiper leurs ouvertures/fermetures afin de maintenir sensiblement constants les paramètres du gaz de production dans la ligne 2.

Pour une machine telle qu'un Roots - Série C susmentionnée, avec un débit inférieur à 1800m³/heure et un diamètre de rotor 6 inférieur à 0,3 mètre, on peut monter dans la joue d'extrémité 8 de la machine opposée à l'arbre d'entraînement des rotors, un détecteur de proximité 7 à effet magnétique, tel que ceux commercialisés par la société METRIX Instrument Co., à une distance de réglage e, correspondant à un fonctionnement nominal de la machine, d'environ 1,25 mm pour un cycle VPSA d'une durée inférieure à 60 secondes, c'est-à-dire avec des phases de compression et d'aspiration n'excédant pas 25 secondes pour produire de l'oxygène à une pureté supérieure à 89 % sur au moins un lit d'adsorbant à base de zéolite.

Quoique l'invention ait été décrite avec des modes de réalisation particuliers, elle ne s'en trouve pas limitée mais est susceptible de modifications et de variantes qui apparaîtront à l'homme de l'art dans le cadre des revendications ci-après. En particulier, le procédé et l'installation trouvent leur application dans d'autres types de traitement de gaz, par exemple pour la séparation de monoxyde ou de dioxyde de carbone par adsorption à partir de gaz de synthèse.

## Revendications

1. Procédé de régulation d'une installation de traitement de fluide (1), comprenant au moins une machine de compression de fluide (4, 5) non refroidie par un fluide externe, **caractérisé en ce que** l'on mesure, en fonctionnement, au moins un jeu (e) entre deux pièces en mouvement relatif (6, 8) de la machine on génère un signal de la mesure de jeu, on compare ce signal avec au moins un seuil déterminé, et lorsque le signal dépasse le seuil déterminé, on abaisse temporairement le régime de rotation de la machine, et/ou on anticipe le passage à une étape de cycle moins contraignante pour la machine.

2. Procédé selon la revendication 1 où l'installation est une installation de traitement de fluide par adsorption sur adsorbant et variation de pression.

3. Procédé selon la revendication 2, **caractérisé en ce que** la machine de compression est une pompe (5) de désorption de l'adsorbant.

4. Procédé selon l'une des revendications 2 ou 3, pour la séparation de constituants de l'air.

5. Procédé selon l'une des revendications 2 ou 3, pour la production de monoxyde ou de dioxyde de carbone à partir d'un mélange gazeux contenant ces composés.

6. Installation de traitement de fluide comprenant au moins une machine de compression de fluide (4,5) non-refroidie par un fluide externe comprenant au moins une partie mobile (6) dans un stator (8) pour admettre et/ou extraire un flux de fluide dans au moins une zone de l'installation (1), **caractérisée en ce que** la machine de compression (4,5) comprend au mois un détecteur (7) de jeu (e) entre une zone de la pièce mobile (6) et le stator (8) fournissant un signal, et un dispositif (9) de contrôle agissant sur l'abaissement du régime de rotation de la machine, et/ou sur l'anticipation d'un passage à une étape de cycle moins contraignante pour la machine en réponse audit signal.

7. Installation selon la revendication 6, **caractérisée en ce que** le dispositif de contrôle (9) comporte un étage de comparaison du signal avec au moins un seuil déterminé.

8. Installation selon la revendication 6 ou la revendication 7,**caractérisée en ce que** l'installation est une installation de traitement de fluide par adsorption et variation de pression comportant au moins une masse d'adsorbant (A, B).

9. Installation selon l'une des revendications 6 à 8, **caractérisée en ce que** la pièce mobile est un rotor (6).

10. Installation selon la revendication 8 ou la revendication 9, **caractérisée en ce que** la machine de compression est une machine à rotors multilobés de type Roots.

11. Installation selon l'une des revendications 8 à 10, **caractérisée en ce que** l'adsorbant est une zéolite.

12. Application d'une installation selon l'une des revendications 6 à 11 à la production d'un constituant de l'air.

## Claims

1. Method of regulating a fluid treatment plant (1), comprising at least one fluid compression machine (4, 5) not cooled by an external fluid, **characterized in that**, while in operation, at least one clearance (e) between two components in relative motion (6, 8) of the machine is measured, a clearance measurement signal is generated, this signal is compared with at least one predetermined threshold and, when the signal exceeds the predetermined threshold, the rotation speed of the machine is temporarily reduced and/or the transition of the machine to a less stringent cycle step is anticipated.

2. Method according to Claim 1, in which the plant is a plant for treating a fluid by adsorption on an adsorbent and by a pressure swing.

3. Method according to Claim 2, **characterized in that** the compression machine is a pump (5) for desorbing the adsorbent.

4. Method according to either of Claims 2 and 3, for separating the constituents of air.

5. Method according to either of Claims 2 and 3, for the production of carbon monoxide or carbon dioxide from a gas mixture containing these compounds.

6. Fluid treatment plant comprising at least one fluid compression machine (4, 5) not cooled by an external fluid having at least one moving part (6) in a stator (8) in order to inject a stream of fluid into at least one region of the plant (1) and/or to extract a stream of fluid therefrom, **characterized in that** the compression machine (4, 5) comprises at least one detector (7) which detects clearance (e) between one region of the moving part (6) and the stator (8) and delivers a signal, and a control device (9) for reducing the rotation speed of the machine and/or for anticipating a transition of the machine to a less stringent cycle step in response to said signal.

7. Plant according to Claim 6, **characterized in that** the control device (9) includes a stage for comparing the signal with the at least one predetermined threshold.

8. Plant according to Claim 6 or Claim 7, **characterized in that** the plant is a plant for the treatment of a fluid by pressure swing adsorption, which includes at least one mass of adsorbent (A, B).

9. Plant according to one of Claims 6 to 8, **characterized in that** the moving part is a rotor (6).

10. Plant according to Claim 8 or Claim 9, **characterized in that** the compression machine is a machine with multilobate rotors of the Roots type.

11. Plant according to one of Claims 8 to 10, **characterized in that** the adsorbent is a zeolite.

12. Application of a plant according to one of Claims 6 to 11 to the production of a constituent of air.

## Patentansprüche

1. Verfahren zur Regulierung einer Anlage zur Behandlung von Fluid (1), umfassend mindestens eine Maschine zur Kompression eines nicht gekühlten Fluids (4, 5) durch ein externes Fluid, **dadurch gekennzeichnet, dass** während des Betriebs mindestens ein Spiel (e) zwischen zwei in relativer Bewegung befindlichen Teilen (6, 8) der Maschine gemessen wird, ein Signal zur Spielmessung erzeugt wird, dieses Signal mit mindestens einer bestimmten Schwelle verglichen wird, und wenn das Signal die bestimmte Schwelle überschreitet, vorübergehend die Drehzahl der Maschine gesenkt und/oder der Übergang zu einem für die Maschine weniger anspruchsvollen Zyklusschritt vorweggenommen wird.

2. Verfahren nach Anspruch 1, bei dem die Anlage eine Anlage zur Behandlung von Fluiden durch Adsorption auf einem Adsorbens und Druckvariation ist.

3. Verfahren nach Anspruch 2, **dadurch gekennzeichnet, dass** die Kompressionsmaschine eine Pumpe (5) zur Desorption des Adsorbens ist.

4. Verfahren nach einem der Ansprüche 2 oder 3 zur Zerlegung von Bestandteilen der Luft.

5. Verfahren nach einem der Ansprüche 2 oder 3 zur Erzeugung von Kohlenmonoxid oder Kohlendioxid aus einem Gasgemisch, das diese Verbindungen enthält.

6. Anlage zur Behandlung von Fluiden, umfassend mindestens eine Maschine zur Kompression eines nicht gekühlten Fluids (4, 5) durch ein externes Fluid, umfassend mindestens einen beweglichen Teil (6) in einem Stator (8), um einen Fluidstrom in mindestens eine Zone der Anlage (1) einzulassen und/oder aus dieser zu extrahieren, **dadurch gekennzeichnet, dass** die Kompressionsmaschine (4, 5) mindestens einen Detektor (7) für das Spiel (e) zwischen einer Zone des beweglichen Teils (6) und dem Stator (8), der ein Signal liefert, und eine Kontrollvorrichtung (9) umfasst, die auf die Absenkung der Drehzahl der Maschine und/oder auf die Vorwegnahme eines Übergangs in einen für die Maschine weniger anspruchsvollen Zyklus als Antwort auf das Signal einwirkt.

7. Anlage nach Anspruch 6, **dadurch gekennzeichnet, dass** die Kontrollvorrichtung (9) einen Schritt des Vergleichens des Signals mit mindestens einer bestimmten Schwelle umfasst.

8. Anlage nach Anspruch 6 oder Anspruch 7, **dadurch gekennzeichnet, dass** die Anlage eine Anlage zur Behandlung von Fluiden durch Adsorption und Druckvariation ist, umfassend mindestens eine Masse eines Adsorbens (A, B).

9. Anlage nach einem der Ansprüche 6 bis 8, **dadurch gekennzeichnet, dass** der bewegliche Teil ein Rotor (6) ist.

10. Anlage nach Anspruch 8 oder Anspruch 9, **dadurch gekennzeichnet, dass** die Kompressionsmaschine eine Maschine mit Rotoren mit mehreren Keulen vom Typ Roots ist.

11. Anlage nach einem der Ansprüche 8 bis 10, **dadurch gekennzeichnet, dass** das Adsorbens ein Zeolith ist.

12. Anwendung einer Anlage nach einem der Ansprüche 6 bis 11 für die Erzeugung eines Bestandteils der Luft.
